# EUROPEAN PATENT APPLICATION

(11) **EP 1 107 079 A2**
(43) Date of publication of application: **13.06.2001**
(21) Application number: 00125134.7
(22) Date of filing: 17.11.2000
(51) Int. Cl.: G05B 19/042, G05B 19/418

(54) **Apparatus, method and system for communicating critical information**

(30) Priority: 30.11.1999 US 451605
(71) Applicant: SIEMENS AKTIENGESELLSCHAFT, 80333 München (DE)
(72) Inventor: Hauf, Ronald, Dipl.-Ing. (FH), 91096 Möhrendorf (DE); Reimann, Jürgen-Andreas, Dipl.-Ing., 91074 Herzogenaurach (DE); Rumpler, Gerhard, Dipl.-Ing., 91056 Erlangen (DE)

(57) **Abstract**

A method for communicating at least one critical information signal between at least one interface apparatus and at least one automated apparatus, the method including the steps of inputting the at least one critical information signal, providing a first channel based critical information frame, which includes the at least one critical information signal, providing at least a second channel based critical information frame, which includes the at least one critical information signal, determining a critical message, which includes at least the first channel based critical information frame and the at least a second channel based critical information frame, and communicating the critical message between the at least one interface apparatus and the at least one automated apparatus so as to provide a communicated critical message.

## Description

### FIELD OF THE INVENTION

The present invention is directed to an apparatus, method and system for communicating critical operating or safety information. In particular, the present invention is directed to an apparatus, method and system for communicating critical operating or safety information between a controller or interface system and an automated system.

### BACKGROUND INFORMATION

In certain systems, one or more controller or interface devices or systems, which may be hand-held by an operator or user, may be used to control, operate, program or otherwise interface with one or more automated devices or systems. Examples of such automated devices or systems may include motor drive systems ("Motor Drives"), numerical controller units or systems ("NCUs"), programmable logic controllers ("PLCs") and robotic systems, and combinations of such systems. In particular, for example, a hand-held controller/interface may provide various critical operating or safety data, information or signals to the automated system. Such information may be provided by emergency "off', "start", "proceed" and "stop" buttons, keys or other input arrangements or devices, which may be any other suitably appropriate input structure. The hand-held controller/interface may also include other safety features, such as "consent" buttons or keys, and any corresponding switching contacts, wiring and relays that may be used to implement such a feature in an automated system. This is because using the start or proceed buttons or keys may require using the corresponding "consent" buttons or keys to better insure intended operation of the critical operating or safety feature or to better prevent unintended operation of such a feature. The hand-held controller/interface may transmit such critical operating or safety input information ("critical information") to the automated system using a "hard-wired" approach.

In the hard-wired approach, each of the critical operating or safety buttons or keys is connected to the actual critical operating or safety features of the automated system by dedicated wiring, which carries the critical operating or safety-related input or output signals. In particular, in such hard-wired systems, two pairs of wires may be used for each critical operating or safety button or key. More particularly, in such systems, the emergency stop button may, for example, have two contacts. Each of the two contacts may also have two terminals. In this way, two pairs of wires (such as, for example, a 24 volt line pair and a 110 volt line pair) may be used to connect the emergency stop button or key contacts to the automated system. The automated system uses the two wire pairs to detect the emergency stop button's actuation state (for example, whether it has been depressed) or if the emergency stop button is not operating properly. These pairs of wires are distinct and separate with respect to a wired data path of a bus system that may be used to couple the controller/interface system and the automated system, but these separate wires may be bundled with the data bus lines in a single shielded cable. Depending on the application, of course, other cable configurations may be required so that a number of application specific cables may need to be made for each of the different applications. Since it should eliminate the need for separate wiring from each of the safety features, the present system does not require the use of different cable configurations depending on the application.

There are other systems that do not use the hard-wired approach, but instead may use the bus system that couples the controller/interface system and the automated system. In particular, certain relatively low level data bus integrity methods may be used in an attempt to ensure better or more reliable communication of the safety information. Such methods may include various error checking and coding schemes for detecting and correcting data errors occurring in the data communicated on the bus system. One example of such a data integrity method is a simple checksum method, in which a single check byte or checksum is formed that is the sum modulo 256 of all the information bytes. The resulting checksum code is used to detect any single byte error, since such an error will cause a recomputed sum of bytes to disagree with the checksum. Also, for example, while certain bus systems, such as the Process Field Bus ("PROFIBUS') communication protocol and system, may use various error code methods to detect certain corrupted or inverted data, they may not detect such data errors if, for example, more than one or two data bits are corrupted. In such a case, the system may not detect any "line interference" that is corrupting or inverting the communicated data. Accordingly, it is not believed that such approaches may not be sufficiently reliable for maintaining the integrity of the critical operating or safety information communicated between one or more controller/interface systems and one or more automated systems.

Other low level data bus integrity methods, which also do not require using the hard-wired approach, may include the method of transmitting the data more than once and then comparing it with other transmissions of the same data. It is also believed, however, that this method may not provide sufficiently adequate or cost-effective methods for better ensuring the data integrity of critical operating or safety information that is communicated between at least one controller/interface system and at least one automated system. For example, when there are one or more controller/interface systems and/or one or more automated systems, it is believed that this approach may not adequately ensure that the controller/interface system is sending the critical operating or safety information to the appropriate or proper automated system or that the automated system is receiving information from the proper controller/interface system. Still another approach is the "fail-safe profile" used by the Distributed Peripheral ("DP") version of the PROFIBUS system. The "fail-safe profile" apparently defines certain data security methods that may permit communication with "fail-safe" systems, such as emergency stop buttons in safety applications. Although this system may apparently be used for "fail safe" communications, it is believed that the present system may provide more cost-effective, flexible or improved critical operating or safety information communication capabilities.

### SUMMARY OF THE INVENTION

The present apparatus, method and system is believed to provide reliable communications of critical operating or safety information (or data) between at least one controller/interface system and at least one automated system. Such reliability may include, for example, better ensuring authenticity of the communicated critical data or information. In particular, the present system uses a dual channel based critical information frame or data structure. As a result, the present system does not require any additional hard-wiring or the use of additional safety consent buttons or keys, or any of their corresponding switching contacts, wiring and relays. Also, it is believed that the present system provides the further advantages that it may use the same single path or "single channel" communication bus structures as existing systems, and may also be used with other single channel communication methods and systems. It is believed that the present apparatus, method and system provides sufficiently cost-effective, flexible or reliable communications of critical operating or safety information between at least one controller/interface system and at least one automated system using a single channel communication medium and system. In particular, it is believed that the present system provides the advantages of authenticating both destination and source identities, recognizing faulty critical information that may have been corrupted between the destination and the source, reliably creating and evaluating the dual channel based critical information frames and corresponding single channel message frames or data structures, recognizing lost or repeated critical information messages by using message sequencing, and recognizing any line interference that may corrupt or invert the communicated critical information.

One aspect of the present invention is directed to providing a method for communicating at least one critical information signal between at least one interface apparatus and at least one automated apparatus, the method comprising the steps of inputting the at least one critical information signal, providing a first channel based critical information frame, which includes the at least one critical information signal, providing at least a second channel based critical information frame, which includes the at least one critical information signal, determining a critical message, which includes at least the first channel based critical information frame and the at least a second channel based critical information frame, and communicating the critical message between the at least one interface apparatus and the at least one automated apparatus so as to provide a communicated critical message.

Another aspect of the present invention is directed to providing a system for communicating at least one critical information signal, the system comprising at least one interface apparatus, which includes at least one input apparatus that is adapted to enable an input of the at least one critical information signal, a first processor that receives the at least one critical information signal and provides a first channel based critical information frame, a second processor that receives the at least one critical information signal and provides a second channel based critical information frame, a third processor that receives the first channel based critical information frame and the second channel based critical information frame and provides a critical message, which includes at least the first channel based critical information frame and the second channel based critical information frame, a communication apparatus that is adapted to communicate the critical message, and at least one automated apparatus communicatively coupled to the at least one interface apparatus.

Yet another aspect of the present invention is directed to providing a system for communicating at least one critical information signal, the system comprising at least one interface apparatus, which includes means for inputting the at least one critical information signal, means for providing a first channel based critical information frame, which includes the at least one critical information signal, means for providing at least a second channel based critical information frame, which includes the at least one critical information signal, means for determining a critical message, which includes at least the first channel based critical information frame and the at least a second channel based critical information frame, and means for communicating the critical message, and at least one automated apparatus communicatively coupled to the at least one interface apparatus.

Still another aspect of the present invention is directed to providing an interface apparatus for use in a system for communicating at least one critical information signal to an automated system, the interface apparatus comprising at least one input apparatus that is adapted to enable an input of at least one critical information signal, a first processor that receives the at least one critical information signal from the input apparatus and provides a first channel based critical information frame, a second processor that receives the at least one critical information signal from the input apparatus and provides a second channel based critical information frame, a third processor that receives the first channel based critical information frame and the second channel based critical information frame from the second processor and provides a critical message, which includes at least the first channel based critical information frame and the second channel based critical information frame, and a first communication apparatus for communicating the critical message to the automated system.

Yet another aspect of the present invention is directed to providing an automated apparatus for use in a system for at least receiving a critical message, which includes dual channel based critical information, from a communication apparatus of an interface apparatus, the automated apparatus comprising at least one of a critical operating apparatus and a safety apparatus, a critical message processor that at least receives the critical message and provides a first received critical message and a second received critical message, wherein the critical message processor compares the first received critical message and the second received critical message and provides a comparison result, and the critical message processor is adapted to operate the at least one of the critical operating apparatus and the safety apparatus based on the comparison result.

Still another aspect of the invention is directed to providing a memory for use in a system for communicating at least one critical information signal, the memory comprising a critical message, which includes a first communication protocol field, a first channel based critical information field, which includes the at least one critical information signal, a second channel based critical information field, which includes the at least one critical information signal, and a second communication protocol field.

### BRIEF DESCRIPTION OF THE DRAWINGS

FIG. 1A shows a logical structure of a first critical information frame or data structure for a first critical information channel.

FIG. 1B shows a logical structure of a second critical information frame or data structure for a second critical information channel.

FIG. 2 shows a single channel critical message frame or data structure, which includes the dual channel based critical information frames of FIG. 1A and FIG. 1B.

FIG. 3 (comprising partial views FIG. 3A (left), FIG. 3B (middle) and FIG. 3C (right)) shows a schematic block diagram of an exemplary embodiment of the present system using a bus structure.

FIG. 4 shows another exemplary embodiment of the present system using a wireless communication system, in which the automated system is a numerical controller system that is further controlled by a programmable logic controller.

FIG. 5 shows a wireless hand-held controller/interface system for use with an automated system in the present system.

FIG. 6 (comprising partial views 6A (left) and 6B (right)) shows a logic flowchart illustrating a method for using the dual channel based critical information frames of FIG. 1A and FIG. 1B to communicate the single channel critical message frame of FIG. 2.

FIG. 7A (comprising partial views 7A-1 (left) and 7A-2 (right)) shows a first part of a logic flowchart illustrating a method for periodically determining the operating status of the critical operating or safety input arrangements of a hand-held controller/interface system.

FIG. 7B (comprising partial views 7B-1 (left) and 7B-2 (right)) shows a second part of a logic flowchart illustrating a method for periodically determining the operating status of the critical operating or safety input arrangements of a hand-held controller/interface system.

### DETAILED DESCRIPTION OF THE INVENTION

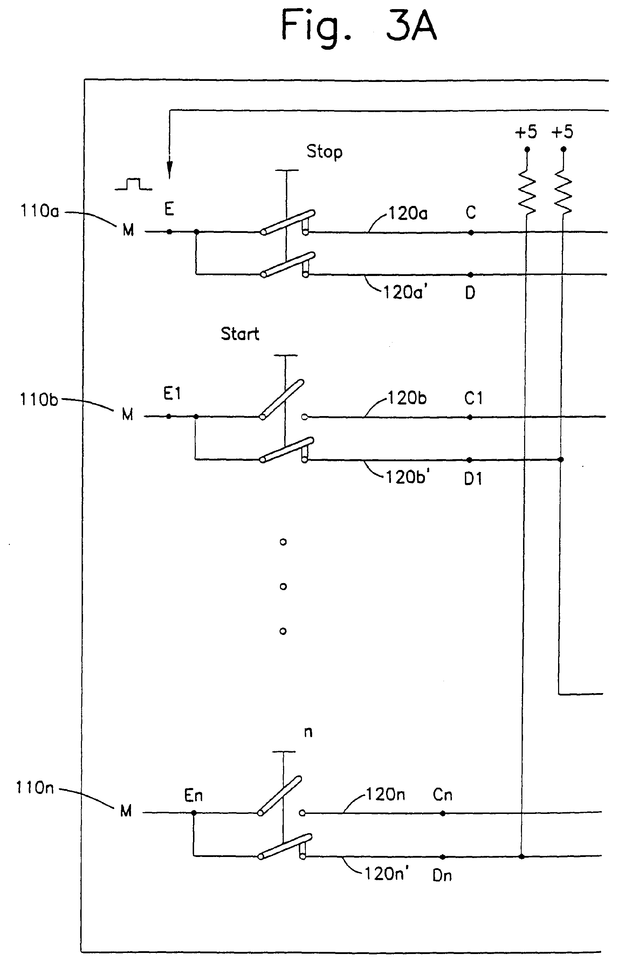

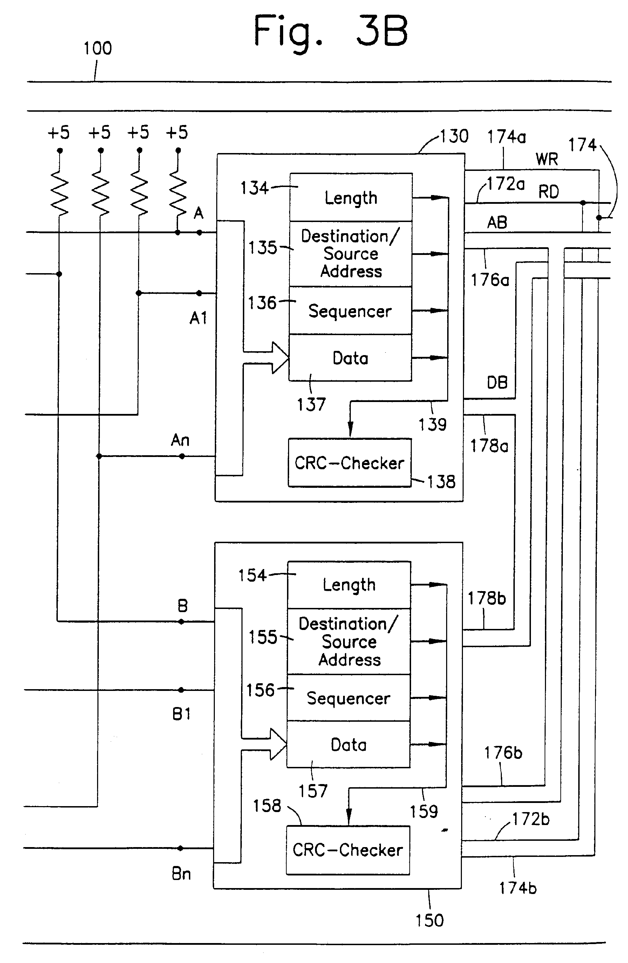

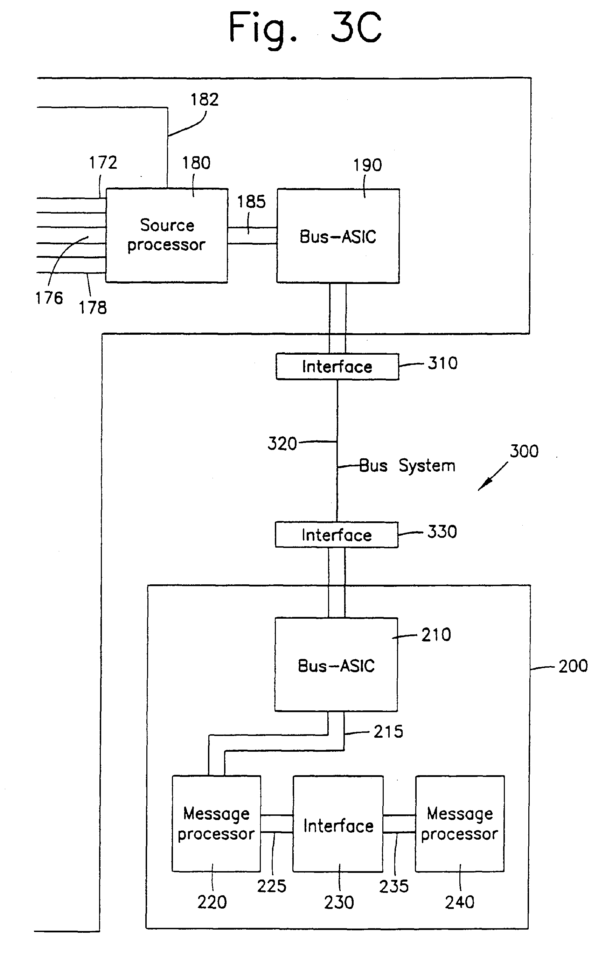

An exemplary embodiment of the present system, which uses a serial bus system, is shown in FIG. 3 (FIG. 3A, FIG. 3B, FIG. 3C (left, middle, right)). In particular, a critical operating or safety information communication system 1 comprises a hand-held controller/interface system 100 that is connected or coupled to an automated system 200 using a serial bus system 300. As discussed, the automated system 200 may include, for example, a human machine interface ("HMI") system, a motor drive system, a numerical controller system, a robotic system, or a programmable logic controller, which may also control such systems, and combinations of such systems. Of course, any other suitably appropriate automated systems may also be used. The critical operating or safety information communication system 1 is believed to provide relatively reliable or secure communications of critical operating or safety information (which, as discussed, may include, for example, emergency off, start, stop, continue or proceed key information) between the hand-held controller/interface system 100 and the automated system 200.

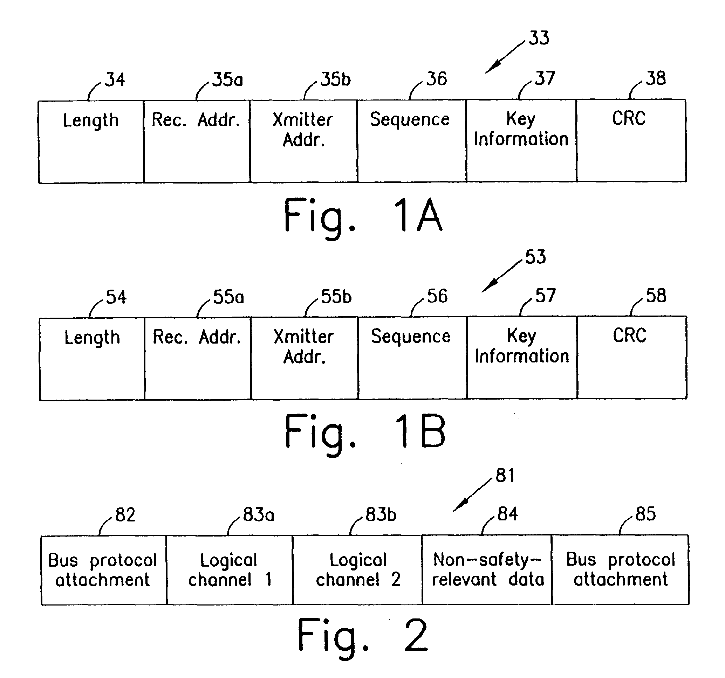

It is believed that the critical operating or safety information communication system 1 is able to provide sufficiently reliable data communication over a single path or "channel" communication medium by using the hand-held controller/interface 100, which has dual path or "channel" critical information processors 130 and 150. The critical information processor 130 represents the first critical information path or "channel" and the critical information processor 150 represents the second critical information path or "channel". In particular, the first channel critical information processor 130 creates or determines a first channel based critical information frame or data structure 33, and the second channel critical information processor 150 creates or determines a second channel based critical information frame or data structure 53. Also, a source or transmitting processor 180 of the hand-held controller/interface system 100 combines the dual channel based (or first and second) critical information frames 33 and 53 into a single channel critical message frame 81 (which is shown in FIG. 2) that is communicated through a single "channel" communication system, namely the single channel bus system 300, to the automated system 200, which has two critical message processors 220 and 240.

As regards the hand-held controller/interface system 100 and as is shown in FIG. 3, it comprises critical operating or safety information buttons, keys, or inputs 110a, 110b,..., 110n, the first channel critical information processor 130 and the second channel critical information processor 150, the source or transmission processor 180 and a source communication bus-ASIC 190. The source communication bus-ASIC 190 enables the hand-held controller/interface system 100 to communicate with the automated system 200 using the serial bus system 300. Examples of a source communication bus-ASIC 190 may include, for example, peripheral PROFIBUS protocol chips, such as ASPC2 (master), SPC3 (slave), SPC 4 (slave) and DPC 31 (slave), as well as single peripheral PROFIBUS protocol chips SPM2 (slave) and LSPM2 (slave). All of these PROFIBUS protocol chips are available from Siemens AG, located in Munich, Germany. While the PROFIBUS protocol may be implemented using any suitable microprocessor having an asynchronous serial interface or UART interface (universal asynchronous receive and transmit), using protocol bus-ASIC chips is believed to be more efficient when the protocol is to be executed at communication speeds of more than 500 kbits per second.

The buttons, keys or inputs 110a, 110b,..., 110n, include the button or key 110a, which is an emergency-stop button or key, the button or key 110b, which is a start button or key and the button or key 110n, which is some other critical operating or safety information button or key. The button or key 110n may include, for example, a limit movement feature, which may be used to limit a particular movement of the automated system 200, or an emergency off feature. Each of the buttons or keys 110a, 110b,..., 110n, are coupled to two information or signal lines, wires or coupling channels 120. As shown, line 120a, having terminal points A and C, couples emergency stop key 110a to the first channel information processor 130, and line 120a, having terminal points B and D, couples emergency stop key 110a to the second channel information processor 150. Likewise, first and second lines 120b, having terminal points A1 and C1, and 120b, having terminal points B1 and D1, couple start key 110b to the first channel information processor 130 and to the second channel information processor 150, respectively. Additionally, critical operating or information button, key or input 110n is also coupled by first and second data lines 120n, having terminal points An and Cn, and 120n, having terminal points Bn and Dn, to the first and second information processors 130 and 150, respectively. The first and second channel data lines 120 are coupled to corresponding positive five (+5) volt sources, which are labeled P5, by corresponding resistor blocks R.

The first critical information processor 130 may be hardwired logic, a microcontroller, a microprocessor or an ASIC implementation, or any other suitably appropriate information processing structure, including a memory, for processing the critical operating or safety information. In the embodiment of FIG. 3, the first and second channel critical information processors 130 and 150 are separate ASIC chips. The chips are separate chips so that if one of the critical information processors 130 and 150 fails, then it should not negatively affect the critical information processor of the other critical information channel. Of course, the dual channel critical information processors 130 and 150 could be arranged on the same chip so long as a failure of one critical information processor does not negatively affect the other critical information processor so as to reduce the reliability of the critical information communication system 1.

As shown in FIG. 1A, FIG. 1B and FIG. 3, the first channel critical information processor 130 processes critical operating or safety information 37, which is received from inputs 110a, 110b,..., 110n, to assemble or otherwise provide a first channel based critical information frame or data structure 33. The first channel based critical information frame 33 comprises a critical information frame length field 34, which may be a number of structure elements or an actual number of bits or bytes of the first channel based critical information frame 33. The first channel based critical information frame 33 further comprises a destination (or receiver) address (or other suitably appropriate identifier) field 35a and a source or transmitter address (or other identifier) field 35b. In particular, the automated system 200 uses the destination address field 35a to confirm whether it is the legitimate or proper destination (or receiver) that is intended to receive the critical operating or safety information 37 from the hand-held controller/interface system 100. Likewise, the automated system 200 uses the source address 35b to establish that the hand-held controller/interface system 100 is the legitimate or proper source of the communicated critical information, rather than another source system in the critical information communication system 1.

The first channel critical information processor 130 also uses a sequence counter or sequencer 136, which may be, for example, a software counter or a hardware counter, for counting or otherwise identifying the communication sequence of each set of critical operating or safety information 37 that the source processor 180 communicates in a critical message frame 81, which is shown in FIG. 2. Since the sequence counter or sequencer 136 provides a sequence number or identifier 36, the automated system 200 may confirm the proper critical message sequence, which includes the critical operating or safety information 37, as it is received. The source processor 180 may be used to initiate the operation of the sequencer 136 by loading it with an initial sequence value, and this may be done when the source processor 180 determines that a proper communication link has been established between the hand-held system controller/interface 100 and the automated system 200. The sequence counter or sequencer 136 then increments the initial sequence value each time that the source processor 180 accesses or reads the first channel based critical information frame 33 and the second channel based critical information frame 53, each of which includes critical operating or safety information 37 and 57, and communicates it as the single channel critical message frame 81 to the automated system 200 using the serial bus system 300. At the automated system 200, each of the first and second critical message processors 220 and 240 authenticate the communicated critical message frame 81, which includes the dual channel based critical operating or safety information frames 37 and 57, by determining whether the transmitted sequence identifiers 36 and 56 have been incremented with respect to the initial or last received sequence value. The first and second critical message processors 220 and 240 retain the initial or last received sequence value in each of their corresponding memories.

As discussed, the first channel based critical operating or safety information frame 37 reflects the status of each of the critical operating or safety information buttons, keys or inputs 110a, 110b,..., 110n. The first channel critical information processor 130 determines a cyclic redundancy check ("CRC") data element or field 38 for the first channel based critical information frame 33 (excluding the cyclic redundancy check ("CRC") data element or field 38) by performing a CRC using the information frame length field 34, the destination address field 35a, the source address field 35b, the sequence identifier field 36, and the critical operating or safety information 37. In particular, the first channel critical information processor 130 performs the CRC by using an irreducible or primitive polynomial as the CRC polynomial, and then combines the resulting CRC-check data field 38 with the remainder of the first channel based critical information frame 33.

Similarly, the second channel critical information processor 150, as is also shown in FIG. 1 and FIG. 3, processes the critical operating or safety information from buttons, keys or inputs 110a, 110b,..., 110n, into the second channel critical information frame 53. The second channel critical information frame 53 comprises a second information frame length field 54, which may also be a number of fields of the second channel based critical information frame 53 or an actual number of bits or bytes of the second channel based critical information frame 53, and further comprises a destination identifier field 55a and a source identifier field 55b. In particular, the automated system 200 uses the destination identifier field 55a to confirm whether it is the legitimate or proper destination (or receiver) that is intended to receive the communicated second channel based critical information frame 53. Likewise, the automated system 200 uses the source identifier field 55b to establish that the hand-held controller/interface system 100 is the legitimate or proper source of the communicated second channel based critical information frame 53, rather than some other source in the critical information communication system 1. The second channel critical information processor 150 also comprises a sequence counter or sequencer 156, which may be a software or a hardware counter, for counting or otherwise identifying the communication sequence of the single channel critical message frame 81. The sequence counter or sequencer 156 provides a sequence identifier or number 56 so that the destination or receiving automated system 200 may confirm that the single channel critical message frame 81, which includes the second channel critical information frame 53, is being received in the proper sequence.

Like sequencer 136, the sequence counter or sequencer 156 may be a software or hardware based counter. The source processor 180 may also be used to load an initial sequence value into the sequencer 156 when the source processor 180 determines that a proper communication link has been established between the hand-held controller/interface system 100 and the automated system 200. The sequence counter or sequencer 156 increments the initial sequence value each time that the source processor 180 communicates the single channel critical message frame 81 to the automated system 200. At the destination or automated system 200, each of the first and second critical message processors 220 and 240 authenticate the communicated critical message frame 81, which includes the dual channel based critical operating or safety information 37 and 57 by determining that the communicated sequence identifier 56 has been incremented with respect to the initial or last received sequence count or identifier. The first and second critical message processors 220 and 240 retain the initial or last received sequence count or identifier in each of their corresponding memories.

As discussed, the second channel based critical operating or safety information frame 57 reflects the status of each of the critical operating or safety buttons, keys or inputs 110, 110b,..., 110n. The second channel critical information processor 150 determines a CRC data element or field 58 for the second information frame 53 (excluding the CRC check data 58) by performing a CRC using the information frame length field 54, the destination identifier field 55a, the source identifier field 55b, the sequence identifier field 56, and the second channel based critical information frame 57. In particular, and like the first channel critical information processor 130, the second channel critical information processor 150 performs the CRC and then combines the CRC-check data 58 with the remainder of the second channel based critical information frame 53.

Using the first channel based critical information frame 33 and the second channel based critical information frame 53, the source processor 180 combines the dual channel based (first and second) critical information frames 33 and 53 into the single channel critical message frame 81. The source or transmitting processor 180 is coupled to the source communication bus-ASIC 190 by source bus-ASIC lines 185, and is coupled to the first and second channel critical information processors 130 and 150 by read (RD) lines 172, which have first and second read line segments 172a, 172b, write (WR) lines 174, which have first and second write line segments 174a, 174b, address bus (AB) 176, which have first and second address bus segments 176a, 176b, and data bus (DB) 178, which have first and second data bus segments 178a, 178b, respectively.

As shown in FIG. 2, the single channel critical message frame 81 comprises a first communication protocol field 82, a first channel based critical information field 83a (which corresponds to the first channel based critical information frame 33), a second channel based critical information field 83b (which corresponds to the second channel based critical information frame 53), an optional non-critical information field 84 and a second bus protocol field 85. The source processor 180 then communicates or transmits the single channel critical message frame 81, including any other non-critical information 84, from the hand-held controller/interface system 100 to the automated system 200 over the single path or channel bus 320 of the bus system 300.

The automated system 200 also comprises a destination communication bus-ASIC 210, which is like the source communication bus-ASIC 190 of the source processor 180 of the hand-held controller/interface system 100. In particular, the destination communication bus-ASIC 210 of automated system 200 is coupled by a first communication line set 215 to the first critical message processor 220, which may be any microcontroller, microprocessor or other suitable processor, including ASIC implementations of such processors. The first critical message processor 220 is coupled by the critical message processor interface 230 to the second critical message processor 240, which is like first critical message processor 220. A second communication line set 225 couples the first critical message processor 220 to the critical message processor interface 230. Finally, the critical message processor interface 230 is also coupled by a third communication line set 235 to the second critical message processor 240.

After the automated system 200 receives the single channel critical message frame 81 through its destination communication bus-ASIC 210, the single channel critical message frame 81 is communicated or transferred to its first and second critical message processors 220 and 240, respectively, by destination communication bus-ASIC data lines 215. The first critical message processor 220 then processes the single channel critical message frame 81 to determine its critical information content, which includes the first channel critical information frame 83a (the first channel based critical information frame 33) and the second channel based critical information frame 83b (the second channel based critical information frame 53). Likewise, the second critical message processor 240 processes the same single channel critical message structure 81, which is received through interface communication line segments 225 and 235 of critical message processor interface 230. The critical message processor interface communication line segments 225 and 235 couple the first critical message processor 220 and the second critical message processor 240 using the critical message processor interface 230.

Each of the critical message processors 220 and 240 authenticates the communicated single channel information frame 81 by confirming the destination and source identifiers 35 and 55 of the critical message frame 81, including whether the automated system 200 is the proper destination. The automated system 200 also determines whether there has been any loss or repetition of the critical operating or safety information 37 and 57 by confirming the current and prior sequence identifiers 36 and 56. The automated system 200 further determines whether there is any line interference, which may have corrupted or inverted the critical information. The automated system 200 does this by confirming the first and second channel based critical information frames 33 and 53 (83a and 83b) with respect to the CRC-check data values 38 and 58. In particular, the first and second critical message processors 220 and 240 compare the first and second channel based critical information frames 83a (33) and 83b (53) of the single channel critical message frame 81. If there is a difference, then the automated system 200 will not use the critical message structure 81 to operate any critical operating or safety arrangement or apparatus of the automated system 200. The critical information communication system 1, including either or both of the hand-held controller/interface system 100 and the automated system 200, may also provide any error messages to the operator of the hand-held controller/interface system 100 or at the location of the automated system 200.

Additionally, the source or transmitting processor 180 may be used by the automated system 200 to periodically check the operating status of the buttons, key or input 110a, as well as keys or inputs 110b,... 110n if that is desired, to determine if the input 110, such as the emergency stop key, has failed. In this regard, for example, both key contacts of the emergency stop key could be open, in which case it may not be determinable if an input voltage has failed. Likewise, both contacts could be closed, in which case it may not be determinable if there is a continuous and proper current or voltage. To determine if there is such a critical failure of any of the buttons, keys or inputs 110a, 110b,..., 110n, the source processor 180 may provide a logic signal (which is a high logic signal in the embodiment of FIG. 3) over key operating status line 182 to key or input 110a, as well as each of the buttons, keys or inputs 110b,..., 110n, regardless of the position of the key contacts. This high logic signal information is then transmitted as simulated critical operating or safety information 37 and 57, through the data lines 120, the first and second critical information processors 130 and 150 and the source processor data bus 178 to the source processor 180, which then causes this information to be communicated to the automated system 200. If the automated system 200 determines that the original high logic signal is not the same or is otherwise corrupted, then it determines that there is a problem and may execute an error message instruction or a fail-safe mode instruction to cause the automated system 200 to output an error message or to enter an appropriate fail-safe mode, including system shut-down. The dynamic and periodic input status check may result in some response delay of on the order of about several milliseconds, for example, but it allows the system to detect "sleeping" hardware failures. In the case of emergency stop, for example, stopping of the system may be delayed for this short period of time.

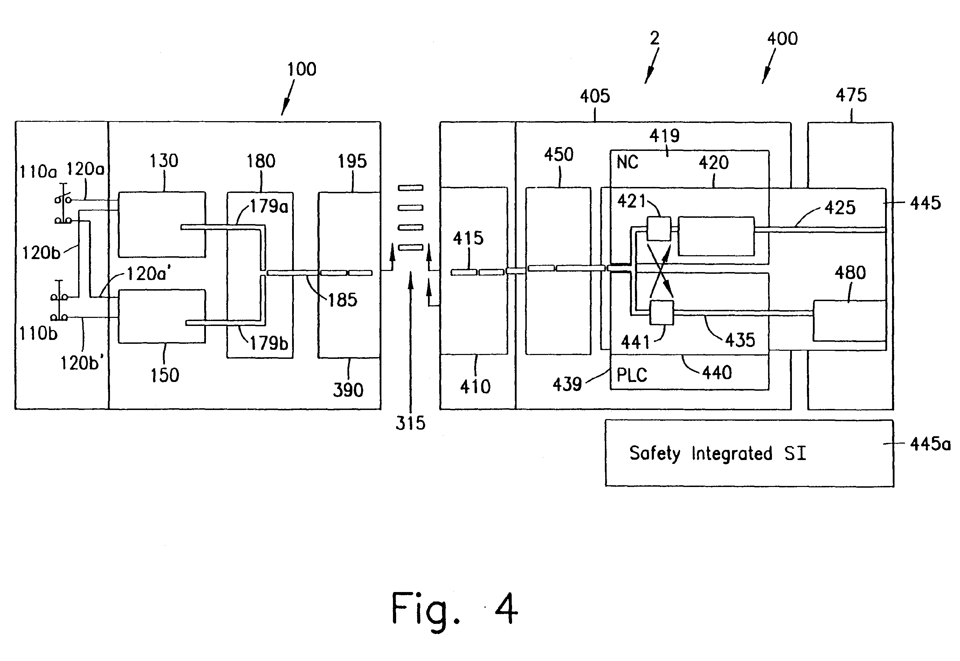

Another embodiment of the present system, which uses a wireless communication system is shown in FIG. 4. The same reference numbers used for the system 1 are generally used to identify corresponding or similar components of wireless band critical information communication system 2. In particular, the system 2 comprises the hand-held controller/interface system 100 that is connected or coupled to a numerical controller system 400, which includes a numerical controller 419 and a programmable logic controller 439, using a wireless communication medium 315 and a source wireless communication system module 390 and a destination wireless communication system module 410. The buttons, keys or inputs 110a and 110b include the button or key 110a, which is an emergency-stop button or key, the button or key 110b, which is a start button or key, and may also include other buttons or keys 110n (not shown), which is some other critical operating or safety information button or key. Each of the buttons or keys 110a and 110b are coupled to two information or signal lines, wires or coupling channels 120. As shown, data or signal line 120a couples emergency stop key 110a to the first channel critical information processor 130, and data or signal line 120a couples emergency stop key 110a to the second channel critical information processor 150. Likewise, first and second data or signal lines 120b and 120b couple start key 110b to the first channel critical information processor 130 and to the second channel critical information processor 150, respectively.

As discussed, the first critical information processor 130 may be hardwired logic, a microcontroller, a microprocessor or an ASIC implementation, or any other suitably appropriate information processing structure, including memory, for processing the critical operating or safety information. In the embodiment of Fig. 4, the dual channel critical information processors 130 and 150 are ASICs. Also, in the FIG. 4 embodiment, the first and second channel critical information processors 130 and 150 are separate ASIC chips for the reasons discussed above. The source or transmitting processor 180 is coupled to the source wireless communication module 390 by source wireless communication module lines 185, and is coupled to the first and second critical information processors 130 and 150 by information transfer lines 179a and 179b, which may include read and write lines, an address bus and a data bus, as in the embodiment of FIG. 3.

As shown in FIG. 1A, FIG. 1B and FIG. 4, the first channel critical information processor 130 processes the first channel based critical operating or safety information 37, which is received from inputs 110a and 110b, into the first channel critical information frame 33 of FIG. 1A and FIG. 1B, which comprises the information frame length field 34, the destination identifier field 35a and the source or transmitter identifier field 35b. In particular, the numerical controller system 400 uses the destination identifier 35a to confirm whether it is the legitimate or proper destination (or receiver) that is intended to receive the critical operating or safety information 37 from the hand-held controller/interface system 100. Likewise, the numerical controller system or automated system 400, which comprises a numerical controller unit 405 (such as the Siemens AG 840D NCU) and a motor drive 475 (such as the Siemens AG 611D) uses the source identifier 35b to establish that the hand-held controller/interface system 100 is the legitimate or proper source of the communicated critical message frame 81, rather than some other controller/interface source in the wireless based critical information communication system 2.

The first channel critical information processor 130 also uses a sequence counter or sequencer, which is like the sequencer 136 of critical information communication system 1 and which may be, for example, a software counter or a hardware counter, for counting or otherwise identifying the communication sequence of each communicated single channel critical message frame 81. Since the sequence counter or sequencer provides a sequence number or identifier 36, the numerical controller system 400 may confirm the proper critical message sequence of the single channel critical message frame 81 as it is received. The source processor 180 may be used to initiate the operation of the sequencer by loading it with an initial sequence value, and this may be done when the source processor or 180 determines that a proper communication link has been established between the hand-held controller/interface system 100 and the numerical controller system 400. The sequence counter or sequencer then increments the initial sequence value each time that the source processor 180 communicates a single channel critical message 81 to the numerical controller system 400 using the wireless communication module 390 and the wireless communication medium 315. At the numerical controller system 400, each of the first and second critical message processors 420 and 440 authenticate the communicated critical message by determining whether the communicated sequence identifiers 36 and 56 have been incremented with respect to the initial or last received sequence value, which the processors 420 and 440 retain in each of their corresponding memories.

The first channel critical information processor 130 determines a CRC-check data element or field 38 for the first channel based critical information frame 33 (excluding a CRC-check data element 38) by performing a CRC using the information frame length 34, the destination identifier 35a, the source identifier 35b, the sequence identifier 36, and the first channel based critical information 37. In particular, the first channel critical information processor 130 performs the CRC, and then combines the resulting CRC-check data value 38 with the remainder of the first channel based critical information frame 33.

Similarly, the second channel critical information processor 150, as is also shown in FIG. 1A, FIG. 1B and FIG. 4, processes the critical operating or safety information from keys or inputs 110a and 110b into the second channel based critical information frame 53, which comprises the second information frame length 54, the destination identifier field 55a and the source identifier field 55b. In particular, the numerical controller system 400 uses the destination identifier 55a to confirm whether it is the legitimate or proper destination or receiver that is intended to receive the communicated second channel based critical information frame 53. Likewise, the numerical controller system 400 uses the source address 55b to establish that the hand-held controller/interface system 100 is the legitimate or proper source of the communicated second channel based critical information frame 33.

The second critical information processor 150 also comprises a sequence counter or sequencer, which is like the sequencer 156 of system 1 and which may be a software or a hardware counter, for counting or otherwise identifying the communication sequence of communicated single channel critical messages. The sequence counter or sequencer provides a sequence identifier or number 56 so that the destination or receiving numerical controller system 400 may confirm that the single channel critical message frame 81, which includes the second channel based critical information frame 53, is received in the proper sequence. The sequence counter or sequencer may be loaded with an initial sequence value by the source processor 180 when it determines that a proper communication link has been established between the hand-held controller/interface system 100 and the numerical controller system 400. The sequence counter or sequencer 156 increments the initial sequence value each time that the source processor 180 communicates a single channel critical message frame 81 to the numerical controller system 400. At the destination or numerical controller system 400, each of the first and second critical message processors 420 and 440 authenticate the communicated single channel critical message frame 81, which includes the dual channel based critical information 37 and 57, by determining that the communicated sequence identifier 56 has been incremented with respect to the initial or last received sequence count or identifier. The first and second channel critical message processors 420 and 440 retain the initial or last received sequence count or identifier in each of their corresponding memories.

The second channel critical information processor 150 determines a CRC-check data element or field 58 for the second channel based critical information frame 53 (excluding the CRC check data 58) by performing a CRC using the information frame length field 54, the destination address field 55a, the source address field 55b, the sequence identifier field 56, and the second channel based critical information 57. In particular, and like the first channel critical information processor 130, the second channel critical information processor 150 performs the CRC and then combines the CRC-check data 58 with the remainder of the second channel based critical information frame 53. As in the FIG. 3 embodiment, the source processor 180 combines the first channel based critical information frame 33 and the second channel based critical information frame 53 into the single channel critical message frame 81 of FIG. 2. The source processor 180 then uses the source wireless communication module 390 to communicate or transmit the single channel critical message structure 81, including any non-critical information 84, from the hand-held controller/interface system 100 to the numerical controller system 400 over the wireless transmission medium 315.

The numerical controller system 400 also comprises a destination wireless communication module 410, which is like the source wireless communication module 390 of the source processor 180 of the hand-held controller/interface system 100. In particular, the numerical controller wireless communication module 410 of the numerical controller system 400 is coupled by a first communication line set 415 to a numerical controller kernel communication module 450, which contains the "core" communication characteristics of the automated or numerical controller system 400, and then to a numerical controller kernel processor or first critical message processor 420, which contains the core operating characteristics and tasks of the numerical controller unit 405, and which may be any microcontroller, microprocessor or other suitable processor, including an ASIC implementation of such processors. The first critical message processor 420 of the numerical controller unit 405 is coupled to a second critical message processor 440, which is a programmable logic controller, such as the S7-300 PLC, which is available from Siemens AG, located in Munich, Germany.

After the numerical controller system 400 receives the single channel critical message frame 81 using its destination wireless communication module 410, the single channel critical message frame 81 is communicated or transferred to its first and second critical message processors 420 and 440, respectively, using wireless communication module data lines 415. The first critical message processor 420 then processes the single channel critical message frame 81, which is received through a numerical controller first channel communication line segment 425, to determine its information content. This information content includes the first channel based critical information frame 83a (corresponding to the first channel based critical information frame 33) and the second channel based critical information frame 83b (corresponding to the second channel based critical information frame 53). Likewise, the second critical message processor 440 processes the same single channel critical message structure 81, which is received through a numerical controller second channel communication line segment 435.

Each of the first and second critical message processors 420 and 440 authenticates the communicated single channel critical information frame 81 by confirming the destination and source identifiers 35 and 55 of the information frame 81, including whether the numerical controller system 400 is the proper destination. The system also determines whether there has been any loss or repetition of the critical operating or safety information by confirming the current and prior sequence identifiers 36 and 56. The system further determines whether there is any line interference, which may have corrupted or inverted the data or information, by confirming the first and second channel based critical information frames 33 and 53 (83 and 83b) with respect to the CRC-check data values 38 and 58. In particular, the first and second critical message processors 420 and 440 compare the first and second channel based critical information frames 83a and 83b of the critical message structure 81. If there is a difference in the information content, then the numerical controller system 400 will not use the critical message structure 81 to operate any "integrated" critical operating or safety arrangements 445 of the numerical controller system 400, which are also indicated by the "Integrated Safety" features block 445a. The system, including either or both of the hand-held controller/interface system 100 and the numerical controller system 400, may also provide any error messages to the operator of the hand-held controller/interface system 100 or at the location of the numerical controller system 400.

Additionally, as in the FIG. 3 embodiment, the source or transmitting processor 180 may be used by the numerical controller system 400 to periodically check the operating status of the buttons, keys or inputs 110a and 110b to determine if any input, such as the emergency stop key, has failed. If the numerical controller system 400 determines that the original high automated system logic signal is not the same or is otherwise corrupted, then it determines that there is a problem, and may then execute an appropriate error message instruction or a fail-safe operating instruction.

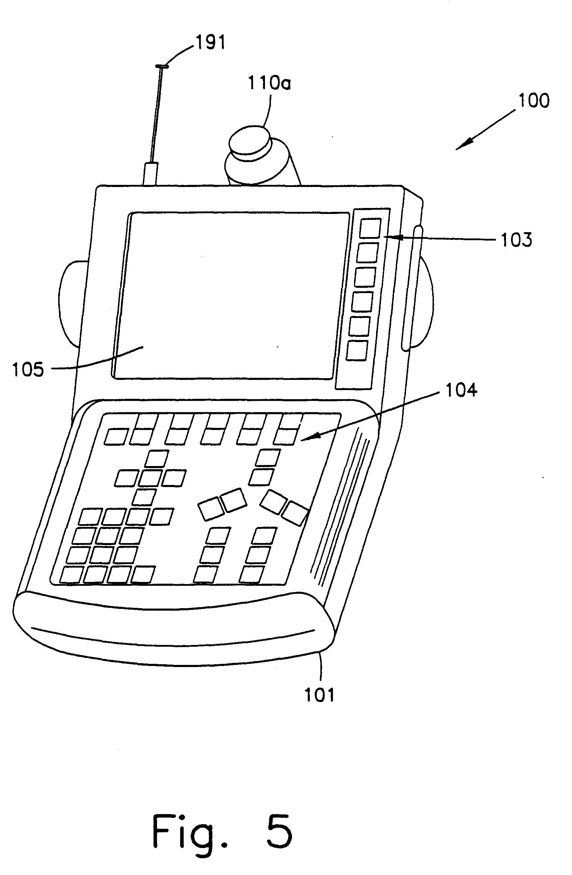

An exemplary embodiment of the hand-held controller/interface system of FIG. 4 is shown in FIG. 5. In particular, the hand-held controller/interface system 100 has a body structure or housing 101, and a stop button 110a that is mounted or otherwise attached to the housing 101. Additionally, it further comprises a first set of key inputs 103 and a second set of key inputs 104, which may include one or more buttons, keys or inputs corresponding to buttons, keys or inputs 110b, 110c,..., 110n. The hand-held controller/interface system 200 may also include a display screen 105. The display screen 105 may include touch screen inputs for inputting critical operating or safety information, as well as other non-critical information. Finally, a wireless antenna 191 enables wireless communications in the second exemplary embodiment of FIG. 4.

As discussed, the dual channel based critical information communication systems 1 and 2 may use other communication methods and systems. These systems may include any suitably appropriate communication method or system, including, for example, RS-232 based systems, RS-485 and UART based systems, such RS-232 based systems and the PROFIBUS protocol and system, as well as various computer network systems, such as the Ethernet system. These systems may use wires, twisted wire pairs, other cable arrangements, including fiber optic cables, and even infrared based communication systems. These systems may also include various wireless communication systems, such as, for example, the time division multiple access ("TDMA") wireless system, the code division multiple access ("CDMA") wireless system, the Pan European digital cellular standard system, which is also known as global system for mobile wireless ("GSM"), universal mobile telecommunication system ("UMTS") and the digital enhanced cordless telephone ("DECT") wireless system.

In particular, for example, the DECT wireless system, where approved, is able to accommodate data transmissions for users, and it is believed that a DECT type system should be relatively cost-effective for use in an industrial environment. The DECT system provides a cordless communications framework for high traffic density and short range telecommunications. The DECT system provides local mobility to portable users in an in-building Private Branch Exchange ("PBX"), and also supports telepoint services. The DECT system is configured around an open standard Open System Interconnection ("OSI"), which makes it possible to interconnect wide area fixed or mobile networks, such as ISDN or GSM, to a portable subscriber population. The DECT system provides relatively low power radio access between portable parts and fixed base stations at ranges of up to a few hundred meters, which is believed to be suitable for various industrial environments. In the DECT system, a control plane ("C-plane") and a user plane ("U-plane") use the services provided by the lower layers (that is, the physical layer and the medium access control ("MAC") layer).

The DECT system uses a FDMA/TDMA/TDD radio transmission method. Within a TDMA time slot, one out often carrier frequencies is dynamically selected and used. The physical layer specification requires that the channels have a bandwidth that is 1.5 times the channel data rate of 1152 kbps, which provides a channel bandwidth of 1.728MHz. Also, DECT has twenty-four time slots per frame, and these twenty-four time slots make up a DECT frame having a 10 millisecond duration. In each time slot, 480 bits are allocated for 32 synchronization bits, 388 data bits, and 60 bits of guard time. The MAC layer includes of a paging channel and a control channel for providing signaling information to the C-plane. The U-plane is served with channels for the transfer of user information. While the standard bit rate of the user information channel is 32 kbps, the DECT system also supports other bit rates, including, for example, 64 kbps (and other multiples of 32 kbps).

The DECT system operates in the 1880 MHz to 1900 MHz band, and within this band, the DECT standard defines ten channels from 1881.792 MHz to 1897.344 MHz having a spacing of 1728 kHz. Also, DECT supports a Multiple Carrier/TDMA/ TDD structure, and each DECT time slot may be assigned to a different channel. The DECT user data is provided in each time slot, and 320 user bits are provided during each time slot, which provide a 32 kbps data stream per user. Also, four (4) parity bits are used for crude error detection. The DECT control information is carried by 64 bits in every time slot of an established communication. These bits are assigned to one of the four logical channels depending on the control information so that the gross control channel data rate is 6.4 kbps per user. The DECT system uses error detection and retransmission to deliver control information, and each 64 bit control word contains 16 CRC bits. The maximum information throughput of the DECT control channel is 4.8 kbps. Also, in the DECT system, spatial diversity at the base station or receiver may be implemented by using two antennas, and the antenna which provides the best signal for each time slot is then used.

Because of at least some of these DECT features and their associated cost, it is believed that the DECT system, where approved, can be a practical wireless method for use with the present system in an industrial environment.

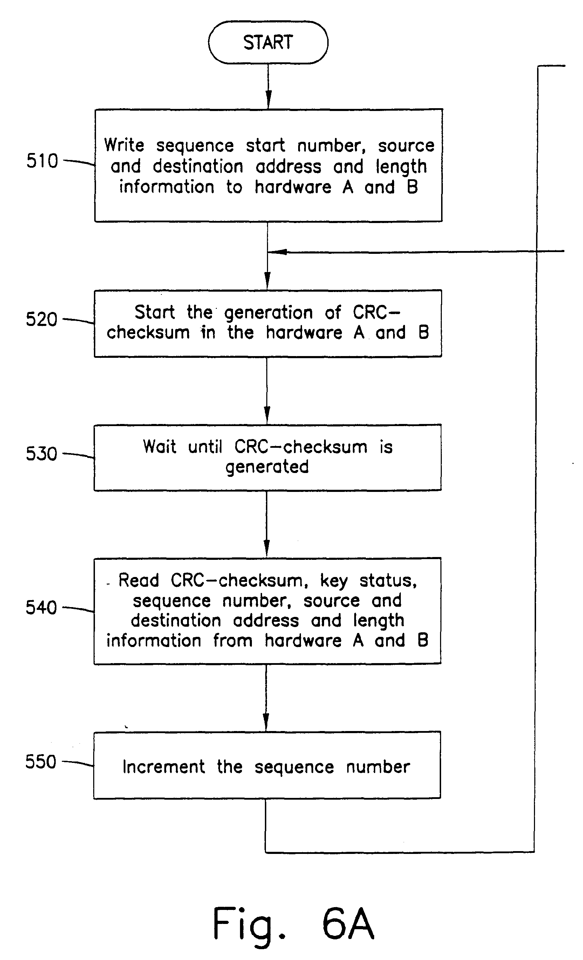

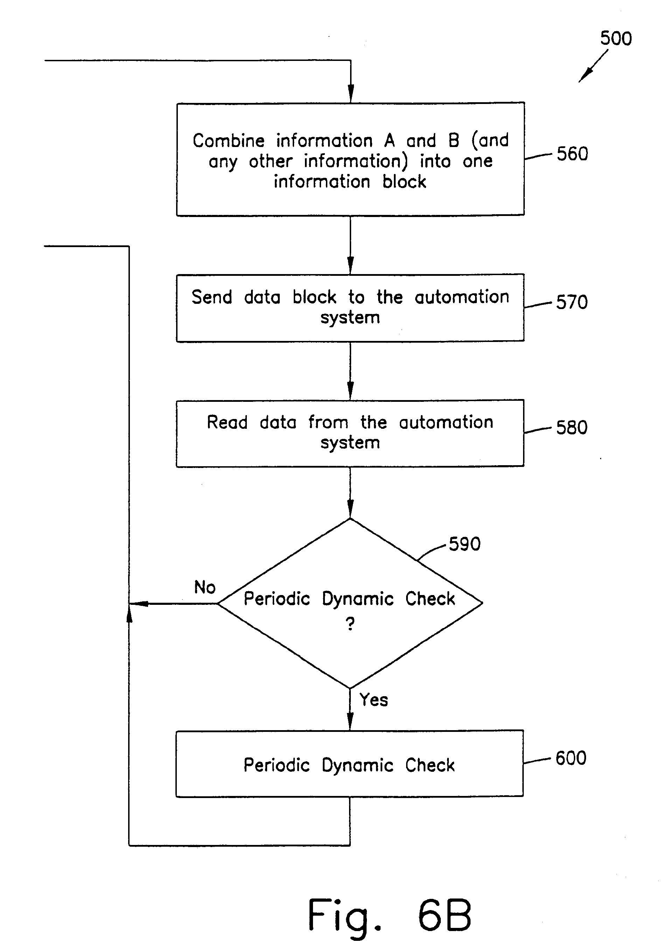

A logic flow chart for the source processor 180 is shown in FIG. 6 (FIG. 6A (left) and FIG. 6B (right)) and is discussed with respect to FIG. 3. As shown in step 510, the source processor 180 writes an initial sequence value (or sequence start number), the source and destination identifiers 35a, 55a and 35b, 55b, respectively, and the length of the information frames 34, 54 to the dual channel critical information processors 130 and 150, respectively using write line 172 address bus 176 and data bus 178. Next, in step 520, the source processor 180 causes the dual channel critical information processors 130 and 150 determines CRC-check data values 38 and 58, respectively, for the first and second channel based critical information frames 33 and 53. In step 530, the source processor 180 waits until each of the dual channel critical information processors 130 and 150 generates its own CRC-check data value 38 and 58, respectively. In particular, the first channel critical information frame processor 130 combines its CRC-check data value 38 with the critical information frame length 34, the destination identifier 35a, the source identifier 35b, the sequence 36 and the critical operating or safety information 37 so as to form the first channel based critical information frame 33. Similarly, the second channel critical information processor 150 combines its CRC-check data value 58 with the information frame length 54, the destination identifier 55a, the source identifier 55b, the sequence 56 and the critical operating or safety information data 57 so as to form the second channel based critical information frame 53.

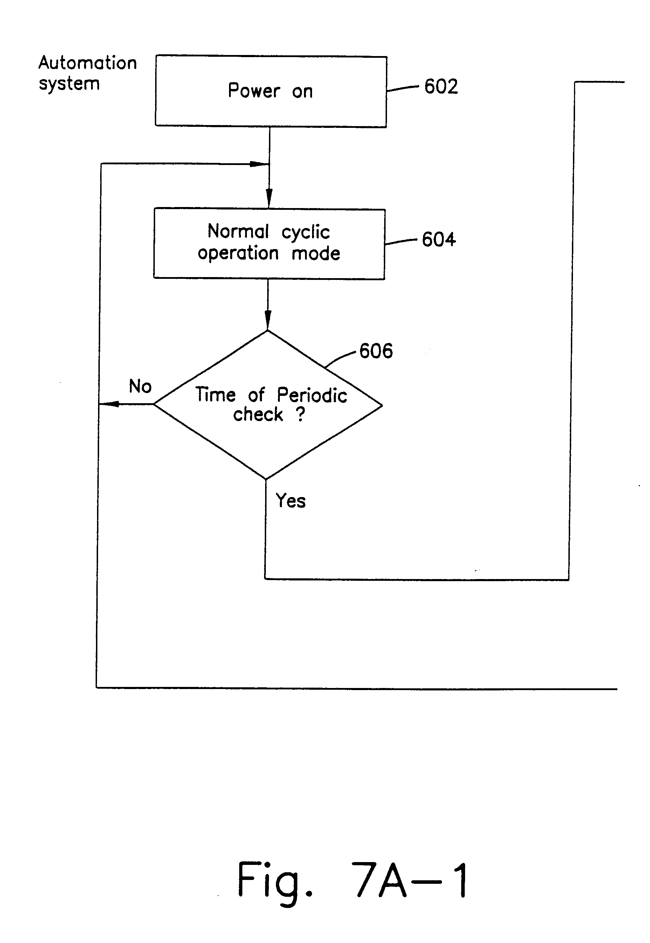

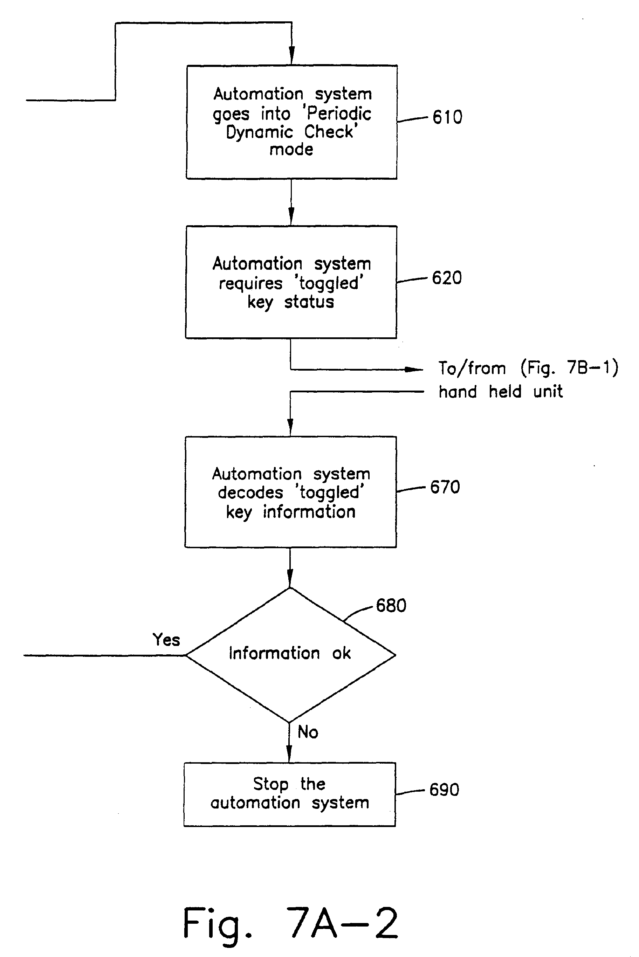

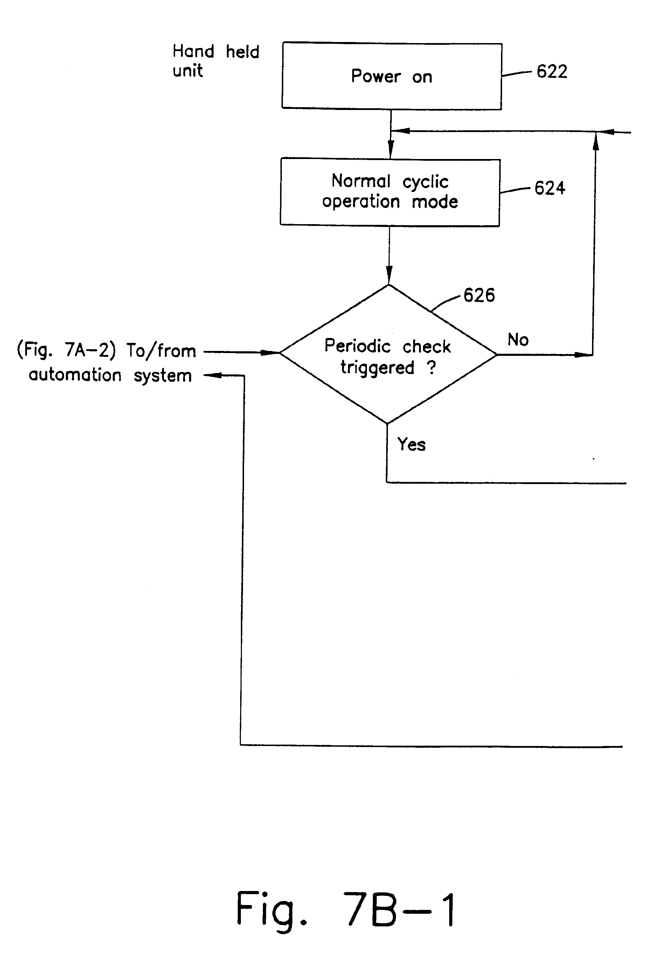

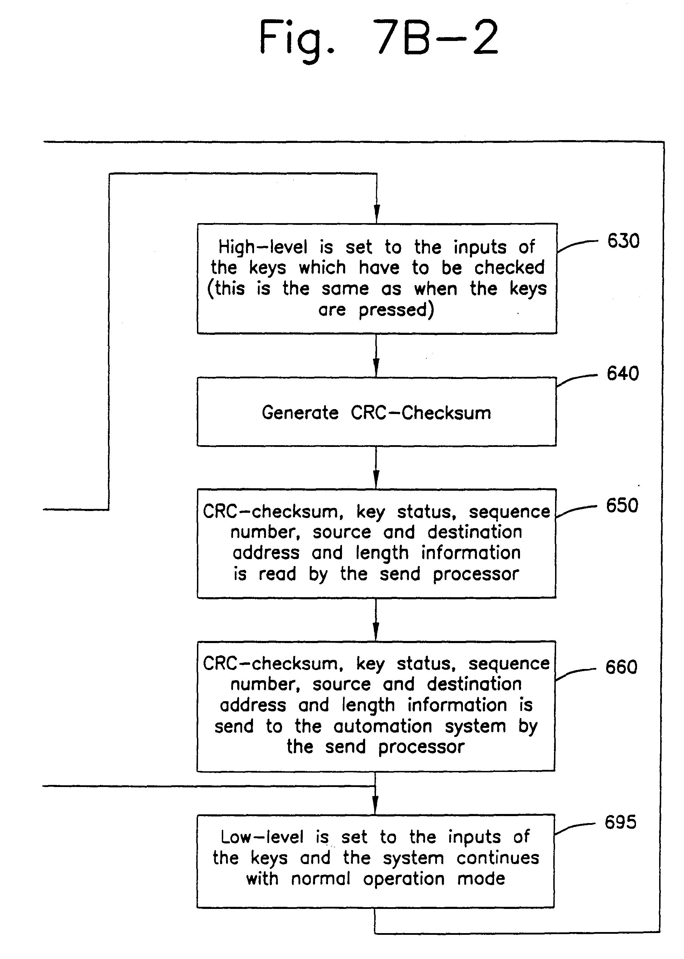

Next, in step 540, the source processor 180 reads the first and second channel based critical information frames 33 and 53, respectively. In particular, the source processor 180 reads first channel based critical information frame 33 using the data bus segment 178a, and it reads second channel based critical information frame 53 using the data bus segment 178b. In step 550, the source processor 180 causes the sequence identifiers 36 and 56 to be incremented. Next, in step 560, the source processor 180 combines the first and second channel based critical information frames 33 and 53 into the single channel critical message structure 81 of FIG. 2. Then, in step 570, the source processor 180, using the source communication bus-ASIC 190 and the source bus interface 310, sends or transmits the single channel critical message structure 81 to the automated system 200 using the serial bus 320. Next, in step 580, the source processor 180 reads any data, information or messages from the automated system 200. Such messages may include, for example, the message that the automated system 200 requires that the source processor 180 check the operating status of buttons, keys or inputs 110a, as well as each of the buttons, keys or inputs 110b,..., 110n, as will be discussed below in further detail with respect to FIG. 7A (FIG. 7A-1 (left) and FIG. 7A-2 (right)) and FIG. 7B (FIG. 7B-1 (left) and FIG. 7B-2 (right)). In particular, in step 590, the automated system 200 may be used to cause the source processor 180 to perform the periodic dynamic check to simulate operation of the buttons, keys or inputs 110a, 110b,..., 110n, by effectively "toggling" or actuating them and checking their operating status. If the source processor 180 must perform the periodic dynamic check, then it proceeds to the next step 600, which is a mode or routine for performing the periodic dynamic check. When the periodic dynamic check is completed or if it is not required, the source processor 180 returns to step 520.

The periodic dynamic input status routine 600 is shown in FIG. 7A (FIG. 7A-1 (left) and FIG. 7A-2 (right)) and FIG. 7B (FIG. 7B-1 (left) and FIG. 7B-2 (right)). In particular, in preliminary steps 602 and 604, the automated system 200 is powered up and enters a normal operating cycle mode. In step 606, the automated system 200 determines whether it is time to do a dynamic input status check based on an appropriate time cycle for performing the dynamic input status check. If not, then automated system 200 continues its normal operating cycle mode in step 604. If the automated system 200 determines in step 606 that it is time to do the dynamic input status check, then it enters a dynamic input status check mode or routine in step 610. Next, in step 620, either or both of first and second critical message processors 220 and 240, using bus system 300, communicate a request for input status message to the source processor 180 of the hand-held controller/interface system 100. The "request for input status" message indicates to the source processor 180 that the automated system 200 requires simulated or "toggled" key or input operating status.

Like the automated system 200, the hand-held controller/interface system 100 also powers up and enters its normal operating cycle in preliminary steps 622 and 624. In step 626, the source processor 180 of the hand-held controller/interface system 100 determines whether the automated system 200 has communicated a message request to do the dynamic input status check. If not, then the system 100 continues its normal operating cycle in step 624. Otherwise, in step 630, based on the request for "toggled" key or input status, the source processor 180 of the hand-held system 200 may check one or more of the buttons, inputs or keys 110a, 110b,..., 110n, by providing a high logic signal, over key operating status line 182 to each of the inputs 110a, 110b,..., 110n, so as to "toggle" or simulate actuation of each of the inputs 110a, 110b,..., 110n. This operation effectively simulates actuation of the keys or inputs 110 by an operator of the hand-held controller/interface system 100. The first and second channel critical information processors 130 and 150 then processes this simulated critical operating or safety information to provide simulated dual channel based critical information frames 33 and 53, which include the generated CRC-check data values 38 and 58 of step 640. Next, in step 650, the source processor 180 accesses or reads the first and second channel based critical information frames 33 and 53, and forms single channel critical message structure 81. In step 660, using source communication bus-ASIC 190 and source bus interface 310, the source processor 180 communicates or transmits the single channel critical message frame 81, which includes the simulated first and second channel based critical information frames 33 and 53, to the automated system 200. In step 670, the first and second critical message processors 220 and 240 of the automated system 200 process or decode the simulated or "toggled" key or input operating status information.

If automated system 200 determines that the simulated key or input information for both information channels is not corrupted, which indicates that there is no failure of the buttons, keys or inputs 110a, 110b,..., 110n, then either or both of the critical message processors 220 and 240 may send a "status ok" message indicating that there are no apparent failures of the buttons, keys or inputs 110a, 110b,..., 110n, to the source processor 180 of the hand-held controller/interface system 100, and the automated system 200 continues its normal operating cycle in step 604. Likewise, in step 695, the source processor 180 may provide a low-level logic signal to one or more of the buttons, keys or inputs 110a, 110b,..., 110n, and the source processor 180 continues its normal operating mode if the inputs 110 are operating properly. If, however, the first and second critical message processors 220 and 240 determine in step 680 that the simulated information indicates a failure of one or more of the buttons, keys or inputs 110a, 110b,..., 110n, then in step 690, either one or both of the critical message processors 220 and 240 causes the automated system 200 to enter an appropriate fail-safe condition or mode, which may include, for example, causing the automated system 200 to cease operations or to provide an appropriate error indication or critical message to the operator. Either one of (or both of) the hand-held controller/interface system 100 and the automated system 200 may be used to provide the error indication or critical message to the operator or system user.

The methods of FIG. 6, FIG. 7A and FIG. 7B also similarly apply to the FIG. 4 embodiment, as well as other embodiments.

## Claims

1. A method for communicating at least one critical information signal between at least one interface apparatus and at least one automated apparatus, the method comprising the steps of:
(a) inputting the at least one critical information signal;
(b) providing a first channel based critical information frame, which includes the at least one critical information signal;
(c) providing at least a second channel based critical information frame, which includes the at least one critical information signal;
(d) determining a critical message, which includes at least the first channel based critical information frame and the at least a second channel based critical information frame; and
(e) communicating the critical message between the at least one interface apparatus and the at least one automated apparatus so as to provide a communicated critical message.

2. The method of claim 1, further comprising the steps of:
(f) checking an input apparatus, which is used to perform step (a), by simulating step (a) so as to provide at least one simulated critical information signal and performing steps (b) through (e) based on the at least one simulated critical information signal; and
(g) performing at least one of the steps of providing an error message and operating a fail-safe mode based on the comparison result.

3. The method of claim 1, further comprising the steps of:
(f) processing the communicated critical message and providing a first received critical message and a second received critical message;
(g) comparing the first received critical message and the second received critical message and providing a comparison result; and
(h) operating at least one of a critical operating apparatus and a safety apparatus of the at least one automated apparatus based on the comparison result.

4. The method of claim 3, further comprising the steps of:
(i) checking an input apparatus, which is used to perform step (a), by simulating step (a) so as to provide at least one simulated critical information signal and performing steps (b) through (g) based on the at least one simulated critical information signal; and
(j) performing at least one of the steps of providing an error message and operating a fail-safe mode based on the comparison result.

5. The method of claim 1, wherein the step of communicating is based on a communication method and the communication method is at least one of a wireless based communication method and a wire based communication method.

6. The method of claim 5, wherein the wireless communication method is at least one of a DECT based communication method, a TDMA based communication method, a CDMA based communication method, a GSM based communication method, a UMTS based communication method and an infrared based communication method.

7. The method of claim 5, wherein the wire based communication method is at least one of an RS-232 based communication method, an RS-485 based communication method, a UART based communication method and a PROFIBUS based communication method.

8. A system for communicating at least one critical information signal, the system comprising:
(a) at least one interface apparatus, which includes:
at least one input apparatus that is adapted to enable an input of the at least one critical information signal;
a first processor that receives the at least one critical information signal and provides a first channel based critical information frame;
a second processor that receives the at least one critical information signal and provides a second channel based critical information frame;
a third processor that receives the first channel based critical information frame and the second channel based critical information frame and provides a critical message, which includes at least the first channel based critical information frame and the second channel based critical information frame; and
a communication apparatus that is adapted to communicate the critical message; and
(b) at least one automated apparatus communicatively coupled to the at least one interface apparatus.

9. The system of claim 8, wherein the at least one automated apparatus includes:
at least one of a critical operating apparatus and a safety apparatus;
a critical message processor that at least receives the critical message from the communication apparatus and provides a first received critical message and a second received critical message;
wherein the critical message processor compares the first received critical message and the second received critical message and provides a comparison result, and the critical message processor is adapted to operate the at least one of the critical operating apparatus and the safety apparatus based on the comparison result.

10. The system of claim 9, wherein the critical message processor is a first critical message processor, which provides the first received critical message, and a second critical message processor, which provides the second received critical message; and
wherein at least one of the first critical message processor and the second critical message processor compares the first received critical message and the second received critical message and provides a comparison result, and at least one of the first critical message processor and the second critical message processor is adapted to operate the at least one of the critical operating apparatus and the safety apparatus based on the comparison result.

11. A system for communicating at least one critical information signal, the system comprising:
(a) at least one interface apparatus, which includes:
means for inputting the at least one critical information signal;
means for providing a first channel based critical information frame, which includes the at least one critical information signal;
means for providing at least a second channel based critical information frame, which includes the at least one critical information signal;
means for determining a critical message, which includes at least the first channel based critical information frame and the at least a second channel based critical information frame; and
means for communicating the critical message; and
(b) at least one automated apparatus communicatively coupled to the at least one interface apparatus.

12. The system of claim 11, wherein the means for communicating the critical message also provides a communicated critical message, and wherein the at least one automated apparatus includes:
at least one of a critical operating apparatus and a safety apparatus;
means for at least receiving the communicated critical message and for providing a first received critical message and a second received critical message;
means for comparing the first received critical message and the second received critical message and for providing a comparison result; and
means for operating the at least one of the critical operating apparatus and the safety apparatus based on the comparison result.

13. The system of claim 11, wherein the critical message further includes at least one communication protocol field and at least one other information field.

14. The system of claim 11, wherein the means for providing the first channel based critical information frame includes:
means for determining a first length of the first channel based critical information frame;
means for providing a first destination identity;
means for providing a first source identity; and
means for providing a first sequence identifier corresponding to a sequence of communicating the critical message.

15. The system of claim 14, wherein means for providing at least a second channel based critical information frame includes:
means for determining at least a second length of the at least a second channel based critical information frame;
means for providing at least a second destination identity;
means for providing at least a second source identity; and
means for providing at least a second sequence identifier corresponding to the sequence of communicating the at least one critical message.

16. The system of claim 15, wherein the critical message further includes at least one communication protocol and at least one other information field.

17. The system of claim 15, wherein the means for providing the first channel based critical information frame further includes: means for determining a check data based on at least one of the first length, the first destination identity, the first source identity, the first sequence identifier, and the at least one critical information signal; and wherein the means for providing the at least a second channel based critical information frame further includes: means for determining at least a second check data based on at least one of the at least a second length, the at least a second destination identity, the at least a second source identity, the at least a second sequence identifier, and the at least one critical information signal.

18. An interface apparatus for use in a system for communicating at least one critical information signal to an automated system, the interface apparatus comprising:
at least one input apparatus that is adapted to enable an input of at least one critical information signal;
a first processor that receives the at least one critical information signal from the input apparatus and provides a first channel based critical information frame;
a second processor that receives the at least one critical information signal from the input apparatus and provides a second channel based critical information frame;
a third processor that receives the first channel based critical information frame and the second channel based critical information frame and provides a critical message, which includes at least the first channel based critical information frame and the second channel based critical information frame; and
a first communication apparatus for communicating the critical message to the automated system.

19. An automated apparatus for use in a system for at least receiving a critical message, which includes dual channel based critical information, from a communication apparatus of an interface apparatus, the automated apparatus comprising:
at least one of a critical operating apparatus and a safety apparatus;
a critical message processor that at least receives the critical message and provides a first received critical message and a second received critical message;
wherein the critical message processor compares the first received critical message and the second received critical message and provides a comparison result, and the critical message processor is adapted to operate the at least one of the critical operating apparatus and the safety apparatus based on the comparison result.

20. The automated apparatus of claim 19, wherein the critical message processor is a first critical message processor, which provides the first received critical message, and a second critical message processor, which provides the second received critical message; and
wherein at least one of the first critical message processor and the second critical message processor compares the first received critical message and the second received critical message and provides a comparison result, and at least one of the first critical message processor and the second critical message processor is adapted to operate the at least one of the critical operating apparatus and the safety apparatus based on the comparison result.

21. A memory for use in a system for communicating at least one critical information signal, the memory comprising:
a critical message, which includes:
a first communication protocol field;
a first channel based critical information field, which includes the at least one critical information signal;
a second channel based critical information field, which includes the at least one critical information signal; and
a second communication protocol field.

22. The memory of claim 21, wherein the first channel based critical information field further includes a first length field, a first destination identifier field, a first source identifier field, and a first sequence identifier field a first error checking field; and the second channel based critical information field further includes a second length field, a second destination identifier field, and a second source identifier field, a second sequence identifier field and a second error checking field.

23. The memory of claim 22, wherein the first channel based critical information field further includes a first error checking field and a second error checking field.
